# EUROPEAN PATENT SPECIFICATION

(11) **EP 0 696 338 B1**
(45) Date of publication and mention of the grant of the patent: **03.02.1999**
(21) Application number: 95910532.1
(22) Date of filing: 28.02.1995
(51) Int. Cl.: F02D 41/38, F02D 41/10, F02D 41/40

(54) **TRANSIENT INJECTION PRESSURE ELECTRONIC CONTROL SYSTEM**
ELEKTRONISCHES STEUERSYSTEM FÜR DEN EINSPRITZDRUCK BEI SICH VERÄNDERNDEN BETRIEBSZUSTÄNDEN
SYSTEME DE COMMANDE ELECTRONIQUE DE PRESSION D'INJECTION TRANSITOIRE

(30) Priority: 01.03.1994 IT TO940138
(43) Date of publication of application: 14.02.1996
(73) Proprietor: ROBERT BOSCH GMBH, 70442 Stuttgart (DE)
(72) Inventor: BURATTI, Riccardo, I-16100 Genova (IT); IMARISIO, Roberto, I-10094 Giaveno (IT)
(86) International application number: EP9500722
(87) International publication number: WO9523921

(56) References cited:
- EP-A- 0 206 517
- US-A- 4 704 999
- PATENT ABSTRACTS OF JAPAN vol. 17, no. 612 (M-1509) 11 November 1993 & JP,A,05 187 301 (NIPPONDENSO CO LTD) 27 July 1993

## Description

### TECHNICAL FIELD

The present invention relates to a transient injection pressure electronic control system.

### BACKGROUND ART

Electronic injection pressure control systems are known wherein an electronic map is supplied with a number of information signals, e.g. proportional to engine speed and fuel supply, and generates a drive signal representing the optimum injection pressure value for the engine speed defined by the input information signals. Such systems may also comprise a circuit supplied with the above information signals, and which generates a signal representing the injection lead angle.

During transient operating states of the engine, produced for example by rapid acceleration, the electronic map generates a high-value drive signal resulting in a rapid increase in injection pressure, in turn resulting in an increase in the noise level and exhaust of the engine.

### DISCLOSURE OF INVENTION

It is an object of the present invention to provide a system designed to overcome the above drawback typically associated with known systems, and which provides for maintaining an extremely low noise level of the engine, and for reducing exhaust even during transient operating states.

According to the present invention, there is provided an electronic system for controlling the injection pressure of an internal combustion engine with the features according to claim 1.

### BRIEF DESCRIPTION OF DRAWINGS

The invention will be described with particular reference to the accompanying drawings, in which:
Figure 1 shows, schematically, an internal combustion engine connected to an electronic control unit operating in accordance with the present invention;
Figure 2 shows a circuit block diagram of the system according to the present invention;
Figures 3a, 3b show time graphs of two quantities controlled by the system according to the present invention.

### BEST MODE FOR CARRYING OUT THE INVENTION

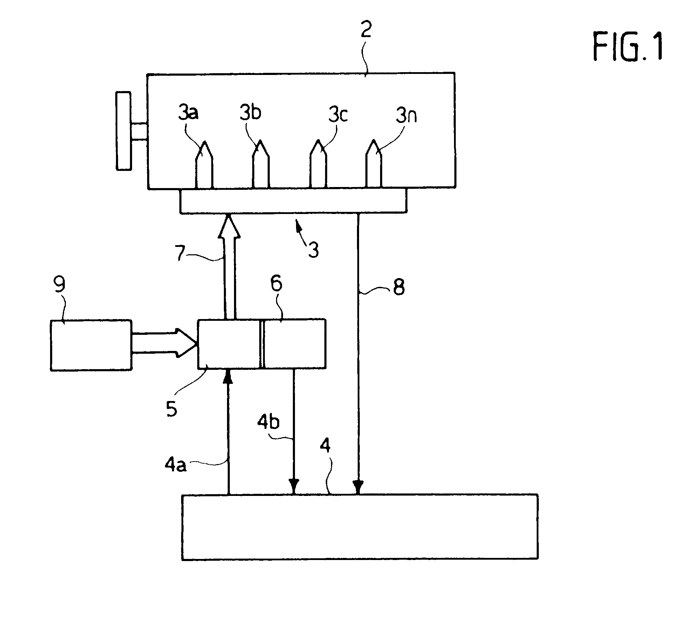

Figure 1 shows, schematically, an internal combustion engine 2, in particular a diesel engine, connected to a high-pressure injection system 3 wherein an atmospheric-pressure tank 4 is connected by a delivery conduit 4a to a pump 5, e.g. a radial-piston pump, presenting a pressure regulating solenoid valve 6 connected by a drain conduit 4b to tank 4.

Pump 5 supplies the fuel at high pressure to injection system 3 via a conduit 7; and injection system 3 comprises a number of injectors 3a, 3b, 3c, .., 3n for receiving the pressurized fuel from pump 5 and injecting it into respective combustion chambers (not shown), and which are also connected to a recirculating conduit 8 terminating in tank 4.

Pump 5 is controlled by an electronic control unit 9 which regulates the fuel supply pressure to system 3 according to the system of the present invention.

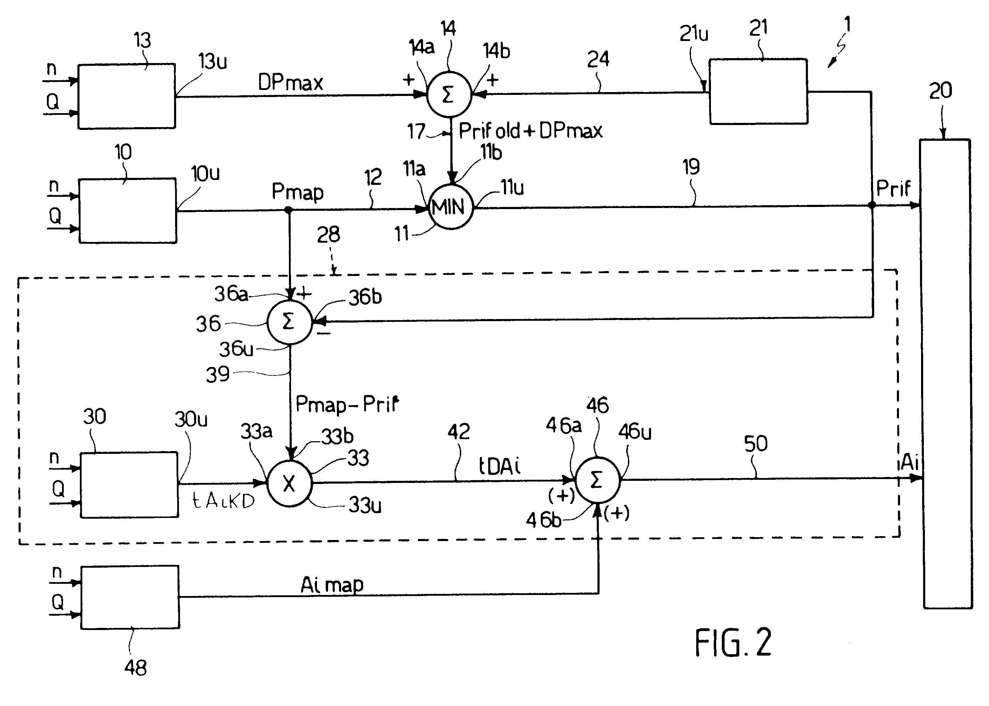

Number 1 in Figure 2 indicates an electronic injection pressure control system formed in control unit 9 and comprising a first computing unit 10 supplied with two signals n, Q proportional to the speed and fuel supply of engine 2, and which presents an output 10u connected to a first input 11a of a node 11 over an electric line 12. Unit 10 comprises an electronic table for generating an output signal Pmap representing the optimum steady-state injection pressure value for the engine speed defined by n and Q.

System 1 also comprises a second computing unit 13 supplied with signals n, Q, presenting an output 13u connected to a first adding input 14a (+) of a node 14, and comprising an electronic table for generating, for each engine cycle, a signal DPmax representing a maximum increase in injection pressure.

Node 11 presents a second input llb connected by an electric line 17 to the output of node 14, and presents an output llu connected to an electric line 19 communicating with an input of a power circuit 20 of electronic control unit 9. Circuit 20 controls pressure regulating solenoid valve 6, for regulating - e.g. in closed-loop manner by means of a feedback signal generated by a pressure sensor (not shown) - fuel injection pressure in proportion to signal Prif on line 19.

Node 11 provides for comparing the signals at its inputs 11a, 11b, and for supplying the lesser signal to output 11u.

System 1 also comprises a storage unit 21 input-connected to line 19, presenting an output 21u connected to a second adding input 14b (+) of node 14 over an electric line 24, and which provides for storing, for each engine cycle, the value of signal Prif on line 19.

System 1 also comprises an injection lead angle computing circuit 28 wherein a third computing unit 30 is supplied with signals n, Q, and presents an output 30u connected to a first input 33a of a multiplying node 33.

Computing unit 30 comprises an electronic table for generating a lead angle correction factor tAiKD expressed in engine angles/bar.

Circuit 28 also comprises a node 36 presenting a first adding input 36a (+) connected to line 12, and a second subtracting input 36b (-) connected to line 19.

Node 36 also presents an output 36u connected to a second input 33b of multiplying node 33 over line 39.

Node 33 presents an output 33u communicating over line 42 with a first adding input 46a (+) of a node 46, which also presents a second adding input 46b (+) connected to the output of a fourth computing unit 48. Unit 48 is supplied with signals n, Q, and generates a signal Aimap representing the steady-state injection lead angle defined by signals n and Q.

"Injection lead angle" is intended to mean the angle traveled by the output shaft of the engine from the instant in which injection commences, and the instant in which the relative cylinder reaches top dead center (TDC). More specifically, in system 1, the instant in which injection commences is taken to be the start of the electric injection signal to the injector, as opposed to actual fuel injection into the combustion chamber.

Node 46 also presents an output 46u connected to a line 50 communicating with circuit 20 which also controls the injection lead angle.

In actual use, computing unit 13 generates for each engine cycle an increase DPmax which is added in node 14 to the memorized Prif-old value of the signal on line 19 in the previous engine cycle, so that adding node 14 generates an output signal DPmax+Prif-old representing the injection pressure value Prif used in the previous engine cycle, plus the DPmax increase.

Node 11 is therefore supplied with signal Pmap (representing the estimated injection pressure value for the current engine cycle) and signal DPmax+Prif-old from node 14, and generates at the output the lesser of the two signals which thus represents the present value of signal Prif actually used by circuit 20 for regulating the injection pressure.

During a transient operating state of the engine, e.g. caused by a sharp acceleration-induced increase in n and Q, the Pmap signal generated by unit 10 increases sharply and, in the absence of node 11 between lines 12 and 19, would be supplied directly to the engine, thus resulting in a rapid increase in injection pressure and hence a high noise level of the engine.

In actual fact, however, the high Pmap signal is compared with the DPmax+Prif-old signal which is undoubtedly less than the Pmap signal by virtue of the Prif-old signal being computed in the engine cycle previous to the transient state, and the DPmax increase being in itself limited.

As such, line 19 is supplied with signal Prif=DPmax+Prif-old which is less than the signal generated by unit 10; signal Prif increases slowly by increase DPmax at each engine cycle; and, upon signal DPmax+Prif-old exceeding signal Pmap, the signal generated by unit 10 is again supplied to circuit 20.

Clearly, therefore, injection pressure is increased slowly even during transient operating states; the noise level of the engine at any engine speed is reduced; and the maximum increase in pressure (DPmax) is selected according to the operating conditions of the engine defined by signals n, Q (engine speed and load) supplied to computing unit 13.

The slower transient-state increase in injection pressure, however, results in delayed fuel ignition and consequently in slower combustion and reduced engine efficiency.

The system according to the present invention, however, compensates automatically for the above drawback by increasing the injection lead angle by a factor which takes into account the difference between the Pmap injection pressure value estimated by unit 10, and the Prif value actually supplied to circuit 20.

More specifically, the output of node 36 presents an error signal Pmap-Prif representing the difference between the Pmap signal computed by map 10, and the Prif signal actually supplied to circuit 20; which error signal is multiplied by lead correction factor tAiKD (expressed in engine angles/bar) to generate a signal tDAi representing the amount by which the engine lead angle Aimap is to be corrected (more specifically, increased) to compensate for the reduction in efficiency caused by the slower increase in supply pressure.

The tDAi signal is thus added in node 46 to the Aimap signal generated by map 48, so that the engine lead angle provided for by unit 9 is proportional to tDAi + Aimap.

The system according to the present invention therefore presents the advantages of limiting the increase in injection pressure during transient operating states, thus greatly reducing the noise level of the engine while at the same time reducing exhaust with no reduction in efficiency.

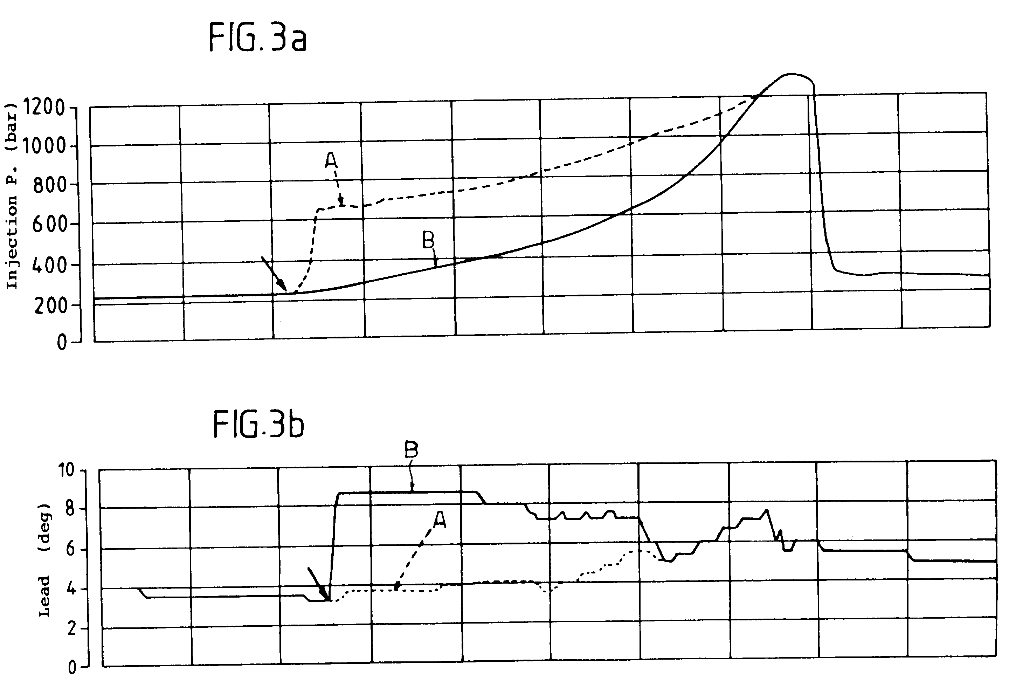

This is clearly demonstrated in Figure 3a, which shows a time graph of the injection pressure (expressed in bars) of an engine with and without the system according to the present invention.

Figure 3a shows a first curve A and a second curve B respectively indicating the injection pressure-time pattern of a known control system and the system according to the present invention. As shown clearly, in the presence of a transient operating state of the engine (indicated by the arrow), the injection pressure of known systems increases sharply, whereas that of the present invention increases at a much slower rate.

Figure 3b shows a first curve A and a second curve B respectively indicating the injection lead angle-time pattern of a known control system and the system according to the present invention. As shown clearly, in the presence of a transient operating state of the engine (indicated by the arrow), the engine lead angle (curve B) increases sharply to compensate for the reduction in efficiency caused by the slower increase in injection pressure (curve B in Figure 3a).

## Claims

1. An electronic system for controlling the injection pressure of an internal combustion engine (2); characterized in that it comprises:
- first computing means (10) supplied with a number of information signals (n, Q) corresponding to operating conditions of said internal combustion engine, and generating a first signal (Pmap) representing the estimated injection pressure for the engine speed defined by said information signals (n, Q);
- second computing means (13) supplied with a number of information signals (n, Q) corresponding to operating conditions of said internal combustion engine, and generating a second signal (DPmax) representing an estimated increase in supply pressure for each engine cycle;
- first adding means (14) presenting a first input (14a) communicating with the output of said second computing means (13), and a second input (14b) communicating with storage means (21) for memorizing, for each engine cycle, a control signal (Prif) detected on an output line (19) for supplying said control signal (Prif) to an injection pressure regulating control circuit (20);
- discriminating means (11) presenting first and second inputs (11a, 11b) connected respectively to the output (10u) of said first computing means (10) and to the output of said first adding means (14);
said discriminating means (11) presenting an output (11u) supplying said control signal (Prif) to said output line (19);
said discriminating means (11) also providing for comparing the signals at said first and second inputs (11a, 11b), and for supplying the lesser of said signals to said output line (19).

2. A system as claimed in Claim 1, characterized in that it comprises electronic compensating means (28) for regulating the lead angle of said engine as a function of the error between said first signal (Pmap) and said control signal (Prif).

3. A system as claimed in Claim 2, characterized in that said electronic compensating means (28) comprise:
- third computing means (30) supplied with a number of information signals (n, Q) and generating a lead angle correction factor (tAiKD);
- multiplying means (33) presenting a first input (33a) communicating with the output of said third computing means (30), and a second input (33b) supplied with said error between said first signal (Pmap) and said control signal (Prif);
said multiplying means (33) generating at the output (33u) a lead angle correction signal (tDAi).

4. A system as claimed in Claim 3, characterized in that it comprises second adding means (46) supplied with said lead angle correction signal (tDAi) and with a fourth signal (Aimap) generated by fourth computing means (48);
said fourth computing means (48) being supplied with a number of information signals (n, Q), and generating said fourth signal (Aimap) which represents the engine lead angle calculated for the engine speed defined by said information signals (n, Q).

5. A system as claimed in any one of the foregoing Claims, characterized in that said information signals comprise a signal proportional to the speed (n) of said engine (2); and a signal proportion to the fuel supply (Q) of the engine (2).

## Patentansprüche

1. Elektronisches Steuersystem für den Einspritzdruck einer Brennkraftmaschine (2), dadurch gekennzeichnet, daß erste Rechenmittel (10), die mit einer Anzahl von Informationssignalen (n, Q), die dem Betriebszustand der Brennkraftmaschine entsprechen, versorgt werden und ein erstes Signal (Pmap) erzeugen, daß den erwarteten Einspritzdruck für die Brennkraftmaschine abhängig von den Informationssignal (n, Q), die dem Betriebszustand der Brennkraftmaschine entsprechen, vorgibt, zweiten Rechenmitteln (13), welchen eine Anzahl von Informationssignalen (n, Q) zugeführt werden und welche ein zweites Signal (DPmax) bereitstellen, daß einen geschätzten Zuwachs für den Einspritzdruck jeden Zylinders angibt, einem ersten Additionsmittel (14) mit einem ersten Eingang (14a), daß mit dem Ausgang des ersten Rechenmittels (13) verbunden ist, und dessen zweiter Eingang (14b) mit einem Speichermittel (21) verbunden ist, welches für jeden Einspritzzyklus ein Steuersignal (Prif) speichert, daß über eine Leitung (19) zu einer Drucksteuereinheit (20) gelangt, einem Vergleichsmittel (11), daß einen ersten und einen zweiten Eingang umfaßt, welche jeweils mit einem Ausgang (10u) des ersten Rechenmittels (10) und dem Ausgang des ersten Additionsmittel (14) verbunden sind, daß der Ausgang des Vergleichsmittels (11) das Signal (Prif) der Leitung (19) zur Verfügung stellt, daß das Vergleichsmittel (11) die Signale des ersten und des zweiten Eingangs vergleicht und daß kleinere der beiden Signale über die Leitung (19) ausgibt.

2. System nach Anspruch 1, dadurch gekennzeichnet, daß es eine elektronische Kompensationseinheit (28) umfaßt, um einen Einspritzführungswinkel der Brennkraftmaschine als Funktion der Abweichung zwischen dem ersten Signal (Pmap) und dem Steuersignal (Prif) zu steuern.

3. System nach Anspruch 2, dadurch gekennzeichnet, daß die elektronische Kompensiereinheit (28) folgendes umfaßt, dritte Rechenmittel (30), die ausgehend von einer Anzahl von Informationssignalen, ein Führungswinkelkorrekturfaktor (tAiKD) bestimmen, Multiplikationsmittel (33), an deren ersten Eingang (33a) das Ausgangssignal der Recheneinheit (30) und an deren zweiten Eingang (33b) die Abweichung zwischen dem ersten Signal (Pmap) und dem zweiten Steuersignal (Prif) anliegt, wobei das Mulktiplikationsmittel (33) ein Führungswinkelkorrektursignal (tDAi) bereitstellt.

4. System nach Anspruch 3, dadurch gekennzeichnet, daß einem zweiten Additionsmittel (46) das Führungswinkelkorrektursignal (tDAi) und ein viertes Signal (Aimap), daß von einer vierten Recheneinheit (48) bereitgestellt wird, zugeführt wird, daß das vierte Rechenmittel (48) das vierte Signal (Aimap), welches den Einspritzführungswinkel repräsentiert, ausgehend von einer Anzahl von Informationssignalen (n, Q) bereitstellt,.

5. System nach einem der vorhergehenden Ansprüche, dadurch gekennzeichnet, daß die Informationssignale ein zur Drehzahl (n) der Brennkraftmaschine (2) und ein zur der eingespritzten Kraftstoffmenge (Q) proportionales Signal umfassen.

## Revendications

1. Système électronique de commande de la pression d'injection d'un moteur à combustion interne (2),
caractérisé en ce qu'
il comprend :
- un premier moyen de calcul (10) alimenté par un certain nombre de signaux d'information (n, Q) correspondant aux conditions de fonctionnement du moteur à combustion interne, et générant un premier signal (Pcarte) qui représente la pression d'injection estimée pour la vitesse du moteur définie par les signaux d'information (n, Q) ;
- un second moyen de calcul (13) alimenté par un certain nombre de signaux d'information (n,Q) correspondant aux conditions de fonctionnement du moteur à combustion interne, et générant un second signal (DPmax) qui représente une augmentation estimée de la pression d'alimentation pour chaque cycle du moteur ;
- un premier moyen d'addition (14) présentant une première entrée (14a) qui communique avec la sortie du second moyen de calcul (13), et une seconde entrée (14b) qui communique avec un moyen de stockage (21) pour mémoriser, pour chaque cycle du moteur, un signal de commande (Prif) détecté sur une ligne de sortie (19) pour fournir le signal de commande (Prif) à un circuit de commande de régulation de pression d'injection (20) ;
- un moyen de discrimination (11) présentant une première entrée et une seconde entrée (11a, 11b) reliées respectivement à la sortie (10u) du premier moyen de calcul (10) et à la sortie du premier moyen d'addition (14) ;
ce moyen de discrimination (11) présentant une sortie (11u) qui fournit le signal de commande (Prif) à la ligne de sortie (19) ;
le moyen de discrimination (11) assurant également la comparaison des signaux à la première entrée et à la seconde entrée (11a, 11b), et la fourniture du plus petit des signaux à la ligne de sortie (19).

2. Système selon la revendication 1,
caractérisé en ce qu'
il comprend un moyen électronique de compensation (28) pour réguler l'angle d'amenée du moteur en fonction de l'erreur entre le premier signal (Pcarte) et le signal de commande (Prif).

3. Système selon la revendication 2,
caractérisé en ce que
le moyen électronique de compensation (28) comprend :
- un troisième moyen de calcul (30) alimenté par un certain nombre de signaux d'information (n, Q) et générant un facteur de correction d'angle d'amenée (tAiKD) ;
- un moyen de multiplication (33) présentant une première entrée (33a) qui communique avec la sortie du troisième moyen de calcul (30), et une seconde entrée (33b) qui est alimentée par l'erreur entre le premier signal (Pcarte) et le signal de commande (Prif) ;
ce moyen de multiplication (33) générant, à la sortie (33u), un signal de correction d'angle d'amenée (tDAi).

4. Système selon la revendication 3,
caractérisé en ce qu'
il comprend un second moyen d'addition (46) alimenté par le signal de correction d'angle d'amenée (tDAi) et par un quatrième signal (Aicarte) généré par un quatrième moyen de calcul (48) ;
ce quatrième moyen de calcul (48) étant alimenté par un certain nombre de signaux d'information (n, Q), et générant le quatrième signal (Aimap) qui représente l'angle d'amenée du moteur calculé pour la vitesse du moteur définie par les signaux d'information (n, Q).

5. Système selon l'une quelconque des revendications précédentes,
caractérisé en ce que
les signaux d'information comprennent un signal proportionnel à la vitesse (n) du moteur (2) ; et un signal proportionnel à l'alimentation en carburant (Q) du moteur (2).
